# EUROPEAN PATENT SPECIFICATION

(11) **EP 4 405 267 B1**
(45) Date of publication and mention of the grant of the patent: **07.05.2025**
(21) Application number: 23702881.6
(22) Date of filing: 19.01.2023
(51) Int. Cl.: B65D 65/46, C08J 5/12, C08L 7/00, C09J 107/02, C09J 7/38

(54) **COMPOSTABLE COLDSEAL COHESIVE**
KOMPOSTIERBARES KALTSIEGELKOHÄSIV
COMPOSITION COHÉSIVE DE SOUDURE PAR PRESSION À FROID COMPOSTABLE

(30) Priority: 19.01.2022 US 202263300704 P; 01.06.2022 US 202263347586 P
(43) Date of publication of application: 31.07.2024
(73) Proprietor: Sun Chemical B.V., 1382 LV Weesp (NL)
(72) Inventor: MACDONALD, Andrew, Newhey Rochdale Greater Manchester OL16 4LE (GB); FRINAULT, Thierry, Newhey Rochdale Greater Manchester OL16 4LE (GB)
(74) Representative: Carpmaels & Ransford LLP
(86) International application number: PCT/GB2023/050098
(87) International publication number: WO 2023/139368

(56) References cited:
- GB-A- 1 052 954
- GB-A- 1 080 441

## Description

### FIELD OF THE INVENTION

The present invention relates to coldseal cohesive compositions and their use in packaging applications, wherein the coldseal cohesive compositions comprise either low amounts, or are free of, non-biodegradable and non-compostable components.

### PRIORITY DOCUMENT

This application claims priority from US provisional application US63/300704 and US provisional application US63/347,586.

### BACKGROUND

Coldseal is a water-based cohesive coating used to seal a variety of paper and film packaging materials. Coldseal is a self-seal adhesive only requiring pressure to seal. As the name implies, coldseal does not require heat. Coldseal cohesives are primarily used to seal heat-sensitive items like chocolate bars. The cohesive is typically applied wet to the substrate by a revolving gravure cylinder and immediately dried in an extended oven before it is reeled up at the end of the press.

Coldseal cohesive compositions known in the art typically comprise many non-biodegradable components, such as acrylic, styrene acrylics, and vinyl acetate emulsions. Thus, there is a need for new coldseal cohesive compositions that comprise low amounts of, or are free of, non-biodegradable and non-compostable components. The coldseal cohesive composition for use in the invention can thus be used in biodegradable packaging applications to afford products that undergo biodegradation and can be composted. New coldseal cohesive compositions must also satisfy the requirements for use, including suitably adhering to substrates and having suitable cohesive forces, in order to effectively seal packaging with the required sealing strength. GB 1052954A relates to the sealing of oriented isotactic polypropylene films. GB1080441A relates to the sealing of foamed plastic sheet materials.

### SUMMARY OF THE INVENTION

The inventors have discovered a water-based coldseal cohesive composition that comprises low amounts of, or is free of, non-biodegradable and non-compostable components. The water-based coldseal cohesive compositions for use in the invention have suitable properties for effective use in sealing packaging. The inventors have thus found a way to replace the non-biodegradable and non-compostable components that are present in the coldseal compositions of the art, in a way that does not compromise performance.

In particular, the present invention provides a structure comprising a water-based coldseal cohesive composition on a substrate, wherein the water-based coldseal cohesive composition comprises between 30 and 90wt% natural rubber latex, between 1 and 30wt% of a biodegradable resinous material, wherein the wt% refers to the solids content of the biodegradable resinous material. The biodegradable resinous material is a protein selected from the group consisting of casein, albumin, whey protein, soy protein, soy protein isolate, and combinations thereof. When the biodegradable resinous material is albumin, it is present in a solids content of at least 4wt% relative to the total weight of the water-based coldseal cohesive composition. The composition further comprises between 30 and 90wt% water. The substrate is selected from the group consisting of cellulose, polybutylene adipate terephthalate, polylactic acid, and combinations thereof. The coldseal cohesive composition is applied directly to the substrate. The composition comprises less than 10wt% of non-compostable material, wherein the non-compostable material is selected from the group consisting of acrylics, styrene acrylics, shellac-modified polystyrene, ethylene vinyl acetate, styrene butadiene, vinyl acetate, including emulsions thereof, and combinations thereof.

The invention further provides a packaged item comprising the structure of the invention. In addition, the invention provides a method of making the structure of the invention. Finally, the invention provides for the use of the coldseal compositions for use in the invention for sealing packaging.

### DESCRIPTION OF THE INVENTION

### Definitions

*Cohesive compositions* are compositions that are capable of bonding to themselves, which can be used to join substrates together, such as packaging components. Cohesive compositions can be applied to the substrates of packaging components, which can be brought together and compressed in order to seal them together. Cohesive compositions bond to themselves, with the cohesive forces resisting separation. Cohesive compositions also act as adhesives and adhere to substrates, with the adhesive forces between the cohesive composition and the substrate also resisting separation.

*Coldseal* cohesives/adhesives are water-based natural rubber latexes primarily used to seal heat-sensitive items, such as chocolate bars. Coldseal is a self-seal adhesive that only requires pressure in order to seal (i.e., it does not require heat).

Unless otherwise stated, all ranges include the respective end points. For example, a range of between 3 and 9, includes the end points 3 and 9. However, where an end point is defined as being "more than" one value and/or up to "less than" another value, the range does not include the respective end points.

Unless otherwise stated, wt% (w/w) refers to the mass of the component in question in relation to all components present in the composition, including any solvents present. Unless otherwise specified, method steps are intended to be performed in the order in which they are recited.

In the context of the present application, *compostability* refers to the ability of some materials to disintegrate within a specified timeframe under controlled conditions (see, ASTM D6400-19, point 6.2, ASTM D6868-19, point 6.2, and EN13432). *Biodegradability* refers to the conversion of organic carbon present in a sample into carbon dioxide under controlled conditions (see ASTM D6400-19, point 6.3, ASTM D6868-19, point 6.3, and EN13432). Where the compostability or biodegradability are defined in terms of a percentage, it is the percentage of the original material that is lost (either through sieving or as carbon dioxide) following the tests outlined in one of the above-mentioned standards. The percentage may not necessarily be compliant with the limit recited in the relevant test.

*Polymeric carbohydrates* are carbohydrates that comprise at least 10 monosaccharide units in a chain.

*Converters* are companies that specialize in modifying or combining raw materials such as polyesters, adhesives, silicone, adhesive tapes, foams, plastics, felts, rubbers, liners and metals, as well as other materials, to create new products.

Directive (EU) 2018/852 is the last amendment of Directive 94/62/EC and contains updated measures designed to prevent the production of packaging waste, and promote the reuse, recycling and other forms of recovering of packaging waste, instead of its final disposal, thus contributing to the transition towards a circular economy.

### The invention

Converters have expressed interest in a biodegradable or compostable coldseal adhesive. However, none are currently available on the market. Aside from the need for coldseal cohesives on heat-sensitive packaging items, converters in Europe would avoid taxation in 2030 by using a coldseal cohesive listed under European Waste "Directive (EU) 2018/852 Article 9(5)". The present application describes development of biodegradable and/or compostable coldseal cohesives with performance that is at least as good as currently available non-biodegradable and/or non-compostable products, when used on biodegradable and/or compostable substrates. Compostable packaging comprising the coldseal adhesive of the invention can be composted in a way that does not hinder composting activity.

The development approach comprises combining natural rubber latex (NRL) with other suitable biodegradable and/or compostable raw materials, for example proteins (e.g. casein, albumin, soy protein and soy protein isolate); and polymeric carbohydrates (e.g. starch, dextrin).

### Rubber

The coldseal cohesive composition for use in the invention comprises an NRL. The NRL for use in the invention maybe be water-based. *Hevea brasiliensis* is the major source of NRL but natural rubber is synthesized in over 2000 plant species and, for example, NRL produced by guayule (*Parthenium argentatum Gray*) or the Russian dandelion (*Taraxacum koksaghyz*), could be used within the scope of this invention.

### Biodegradable resinous material

It has surprisingly been found that biodegradable and/or compostable materials can be used to replace the non-biodegradable materials typically incorporated into coldseal compositions of the art, to provide compositions that have cohesive, adhesive, and blocking properties that are at least comparative with compositions of the art.

The biodegradable resinous material for use in the compositions for use in the invention is in the form of a resin (i.e., it is resinous). The biodegradable resinous material for use in the invention is a protein selected from the group consisting of casein, albumin, whey protein, soy protein, soy protein isolate, and combinations thereof. The biodegradable resinous material for use in the invention is preferably casein and/or albumin.

Other biodegradable resinous materials include polymeric carbohydrates such as starch, dextrin, cellulose, cyclodextrins, pectin, chitin, chitosan, hyaluronic acid, carrageenan gum, xanthan gum, and combinations therefore.

The biodegradable resinous material for use in the invention may be combination of two or more of the proteins discussed above.

The biodegradable resinous material preferably imparts adhesion and anti-blocking properties to the formulation, properties that are normally achieved in non-biodegradable or non-compostable coldseal cohesives by combining NRL with various acrylic, styrene acrylics, vinyl acetate, or similar non-biodegradable and/or non-compostable emulsions.

### Biodegradability / Compostability

Packaging material is a finished product that can be considered compostable only if it's strictly compliant to certain criteria that ensures that the composting process will take place according to set rules and restrictions and in a controlled way, as opposed to a generic and uncontrolled biodegradation process. Specific regulations are in place in different regions. In general, the criteria are similar and stipulate that the compost produced is of good-quality and does not contain contaminants.

Packaging products include different constituents, which are classified as "components." These include the substrate, inks, coldseals, adhesives and others. All components must comply with set rules. However, the complexity of these rules is a function of the components' maximum weight percentage in the packaging product. The substrate is normally the main component and the one that plays the most active part in the composting process. For this reason, compostable substrates are independently tested, not only for chemical composition and ecotoxicity, but also for biodegradation and **disintegration,** unlike components that don't exceed a certain weight percentage, as defined by the relevant standard.

According to the main international standards (i.e., ASTM 6400, ASTM D6868-19, EN13432), products applied at weight percentages higher than 1% would be considered package "constituents." They would have to pass not only eco-toxicity and chemical analysis tests, but also the same biodegradation and disintegration tests required for the main packaging component, which is the actively compostable substrate.

Compostability is commonly measured according to the following standards: European EN 13432 (covering all packaging types), and the North American ASTM D6400-19 and D6868-19 standards (covering plastic and paper packaging products, respectively).

The European EN 13432 Standard has been adopted by many national standard bodies in many European Union member states. Key tests and pass/fail criteria are:
- Disintegration - the packaging sample is mixed with organic waste and maintained under test scale composting conditions for 12 weeks, after which time no more than 10% of material fragments are allowed to be larger than 2mm.
- Biodegradability - a measure of the actual metabolic, microbial conversion under composting conditions of the packaging sample into water, carbon dioxide and new cell biomass. In industrial compostability conditions, within a maximum of six months (at 58°C ± 2°C), the biodegradation of the test sample must generate an amount of carbon dioxide that is at least 90% of the carbon dioxide given off from the control/reference material. In home compostability conditions biodegradation & disintegration testing are carried out at ambient temperature.
- Low levels of heavy metals and potentially toxic elements, with adverse effect on the quality of compost produced - upper limits in mg/kg of dry sample are: zinc 150, copper 50, nickel 25, cadmium 0.5, lead 50, mercury 0.5, chromium 50, molybdenum 1, selenium 0.75, arsenic 5 and fluoride 100.
- Ecotoxicity - The composted packaging material must not have adverse effect on selected plants growth through changes in the characteristics of the compost and soil contamination.

The North American ASTM D6400-19/D6868-19 Standards is similar to the EN 13432 Standard, but the NA ASTM D6400-19/D6868-19 Standards are also aimed at supporting the evidence that "*the entire product or package will completely break down and return to nature within a reasonably short period of time after customary disposal*," which in this case is defined as 84 days for fragmentation of at least 90% of the product and 180 days for complete mineralization in a properly managed composting facility.

The main difference between ASTM D6400-19/D6868-19 and the EN13432 standard is that coatings / adhesives / coldseals and other components of the package with high application limits at a weight percentage between 1% and 10% require additional biodegradation tests in ASTM D6400-19/6868, wherein each component is tested individually.

The water-based coldseal cohesive compositions for use in the invention disintegrate under the conditions outlined in ASTM D6400-19, ASTM D6868-19, or EN13432 (see point 6.2) such that no more than 50% of its dry weight remains after sieving on a 2.0 mm sieve (i.e., the composition is compostable to ≥50%). The water-based coldseal cohesive compositions for use inthe invention preferably disintegrate under the conditions outlined in ASTM D6400-19, ASTM D6868-19 (see point 6.2), or EN13432, such that no more than 30% of its dry weight remains after sieving on a 2.0 mm sieve (i.e., the composition is compostable to ≥70%), such as more preferably no more than 10% of its dry weight remains after sieving on a 2.0 mm sieve (i.e., the composition is compostable to ≥90%). In other words, the water-based coldseal cohesive compositions for use inthe invention pass the test conditions outlined in either ASTM D6400-19 (point 6.2), ASTM D6868-19 (point 6.2), EN13432. The water-based coldseal cohesive compositions for use inthe invention preferably pass the test conditions outlined in both ASTM D6400-19 (point 6.2) and ASTM D6868-19.

The water-based coldseal cohesive compositions for use in the invention may also biodegrade under the conditions outlined in either of ASTM D6400-19, ASTM D6868-19 (see point 6.3), or EN13432, such that at least 30% of the organic carbon present is converted to carbon dioxide (i.e. the composition is biodegradable to at least 30%). The water-based coldseal cohesive compositions for use inthe invention preferably biodegrade under the conditions outlined in either of ASTM D6400-19, ASTM D6868-19, or EN13432 (see point 6.3) such that at least 50% of the organic carbon present is converted to carbon dioxide (i.e. the composition is biodegradable to at least 50%), such as more preferably at least 70% of the organic carbon present is converted to carbon dioxide (i.e. the composition is biodegradable to at least 70%). The water-based coldseal cohesive compositions for use inthe invention may biodegrade under the conditions outlined in EN13432 and comply with this standard.

The water-based coldseal cohesive compositions for use inthe invention may comply with at least one of ASTM D6400-19, ASTM D6868-19, and/or EN13432. The water-based coldseal cohesive compositions for use inthe invention preferably comply with at least EN13432. The water-based coldseal cohesive compositions for use inthe invention may comply with all of ASTM D6400-19, ASTM D6868-19, and EN13432.

### Additives

The coldseal cohesive compositions for use inthe invention may further comprise one or more additives. The additives may be selected from the group consisting of anti-foaming agents, biocide agents, and combinations thereof.

### Amounts

### Biodegradable resinous material

As discussed, the biodegradable resinous materials are preferably solutions or dispersions of the biodegradable resinous materials in a solvent. The solvent is preferably water. The coldseal cohesive compositions for use inthe invention preferably comprise between 10 and 70 wt% of a solution or dispersion of the one or more biodegradable resinous materials, such as between 10 and 60wt%, and more preferably between 20 and 50wt%, such between 30 and 50 wt% of a solution or dispersion of the one of more biodegradable resinous materials.

The biodegradable resinous solvents and dispersions preferably have a solids content of between 5 and 30 wt%, more preferably of between 7 and 20 wt%, and even more preferably of between 9 and 15 wt%, such as between 9 and 12 wt%. Accordingly, the coldseal cohesive compositions for use in the invention comprises between 1 and 30 wt% of biodegradable resinous solids (e.g. casein and albumin), such as between 1 and 20 wt%, and more preferably between 2 and 15wt%, such as between 2 and 10 wt%, and even more preferably between 2 and 8 wt% of biodegradable resinous solids (e.g. casein and albumin).

When the biodegradable resinous material is albumin, the coldseal cohesive compositions for use in the invention comprise at least 4wt% albumin solids relative to the total weight of the water-based coldseal cohesive composition. The coldseal cohesive compositions for use in the invention may comprise between 4 and 15wt% albumin solids, and preferably between 4 and 10wt%, and even more preferably between 4 and 8 wt% albumin solids.

### Natural rubber

The coldseal cohesive compositions for use in the invention comprises between 30 and 90 wt% of NRL, such as between 40 and 80wt%, and more preferably between 45 and 70wt%. The NRLs for use in the invention comprise natural rubber and water.

The NRL for use in the invention preferably has a solids content between 20 and 90wt%, such as more preferably between 40 and 80 wt%, and most preferably between 50 and 70 wt%, such as around 60 wt%. Accordingly, the coldseal cohesive compositions for use in the invention preferably comprise between 10 and 70 wt% of natural rubber solids, such as between 15 and 60 wt%, more preferably between 20 and 50 wt% of natural rubber solids, and even more preferably between 25 wt% and 45 wt% of natural rubber solids, such as between 25wt% and 36wt% of natural rubber solids.

When the biodegradable resinous material comprises albumin, it is preferred that the coldseal cohesive composition comprises between 15 and 50 wt% natural rubber solids, more preferably between 15 and 40 wt% of natural rubber solids, and even more preferably between 20 wt% and 36 wt% of natural rubber solids.

### Non-biodegradable / non-compostable materials

The coldseal cohesive composition for use in the invention comprises less than 10wt%, and preferably less than 5 wt%, of non-compostable materials. The coldseal cohesive composition for use in the invention may be free of non-compostable materials.

The coldseal cohesive composition for use in the invention preferably comprises less than 50wt% of non-compostable materials, relative to the total solids content, such as less than 40wt%, more preferably less than 30wt%, such as less than 20 wt%, less than 10wt%, and even more preferably less than 5 wt% of non-compostable materials relative to the total solids content.

The coldseal cohesive composition for use in the invention preferably comprises less than 70wt% of non-biodegradable materials, such as less than 60wt%, and more preferably less than 50wt% of non- biodegradable materials.

Non-biodegradable or non-compostable materials are materials that are non-compliant with the following standards: EN 13432 (covering all packaging types), ASTM D6400-19 and D6868-19 (covering plastic and paper packaging products, respectively). In particular, non-compostable materials fail at least one of the relevant tests outlined in ASTM D6400-19 (point 6.2), ASTM D6868-19 (point 6.2) or EN13432. Non-biodegradable materials fail at least one of the relevant tests outlined in ASTM D6400-19 (point 6.3), ASTM D6868-19 (point 6.3) or EN13432. Examples of non-biodegradable and/or non-compostable materials include acrylics, styrene acrylics, shellac-modified polystyrene, ethylene vinyl acetate, styrene butadiene, vinyl acetate, and emulsions of any of the aforementioned.

### Ratio of natural rubber solids to biodegradable resinous material solids

The coldseal cohesive composition for use in the invention preferably comprises natural rubber solids and biodegradable resinous material solids in a ratio of between 50:1 to 1:10, such as between 30:1 and 1:5. The coldseal cohesive composition for use in the invention more preferably comprises natural rubber solids and biodegradable resinous material solids in a ratio of between 20:1 to 1:1, such as between 20:1 and 2:1.

The coldseal cohesive composition for use in the invention even more preferably comprises natural rubber solids and biodegradable resinous material solids in a ratio of between 16:1 to 4:1.

### Water

The coldseal cohesive compositions for use in the invention comprise water in an amount between 30 and 90 wt%, such as between 40 and 80 wt%, more preferably between 50 and 75 wt%, and even more preferably the coldseal cohesive compositions for use in the invention comprise water in an amount between 54 and 70 wt%.

### Total Solids Content

The coldseal cohesive composition for use in the invention preferably has a solids content between 10 and 60wt%, such as between 20 and 50 wt%, or more preferably between 30 and 48wt%.

### Additives

The coldseal cohesive composition for use in the invention may comprise one or more additives in an amount up to 10 wt%, such as up to 8 wt%, preferably up to 5wt%, more preferably up to 3 wt%, and even more preferably up to 1 wt% of one or more additives.

### Exemplary Coldseal Adhesive Compositions for use in the Invention

The coldseal cohesive compositions for use in the invention may comprise between 1 and 15wt% of biodegradable resinous solids (e.g. casein and/or albumin), between 10 wt% and 70 wt% of natural rubber solids, between 30 and 90 wt% water, and optionally up to 5 wt% of one or more additives. The coldseal cohesive compositions for use in the invention may comprise between 10 and 60 wt% solids. The coldseal cohesive compositions for use in the invention may comprise less than 30 wt% of non-biodegradable and non-compostable materials.

The coldseal cohesive compositions for use in the invention preferably comprise between 2 and 15wt% of biodegradable resinous solids (e.g. casein and/or albumin), between 20 wt% and 50 wt% of natural rubber solids, between 50 and 75 wt% water, and optionally up to 3 wt% of one or more additives. The coldseal cohesive compositions for use in the invention preferably comprise between 20 and 50 wt% solids. The coldseal cohesive compositions for use in the invention preferably comprise less than 10 wt% of non-biodegradable and non-compostable materials.

The coldseal cohesive compositions for use in the invention more preferably comprise between 2 and 8wt% of biodegradable resinous solids (e.g. casein and/or albumin), between 25 wt% and 45 wt% of natural rubber solids, between 54 and 70 wt% water, and optionally up to 1 wt% of one or more additives. The coldseal cohesive compositions for use in the invention more preferably comprise between 30 and 48 wt% solids. The coldseal cohesive composition for use in the invention more preferably comprise less than 5 wt% of non-biodegradable and non-compostable materials.

### Structures / Substrates

The invention further provides a structure comprising the coldseal cohesive composition for use in the invention on a substrate. The structure maybe a printed structure further comprising an additional printed layer on the substrate. Moreover, the coldseal cohesive composition for use in the invention may be printed onto the substrate. The structure of the invention may be a printed packaging structure, for example, for a food item.

The structure of the invention may comprise the coldseal cohesive composition for use in the invention coated onto the substrate at a dry coat weight of between 1 and 10 g/m², such as between 2 and 8 g/m², more preferably between 3 and 6 g/m², and even more preferably between 3 and 5 g/m². The coldseal cohesive composition for use in the invention may represent greater than 1 wt% of the total mass of the structure.

The substrate may have a thickness of between 10 and 100 µm, such as between 15 and 80 µm, preferably between 20 and 50 µm, and more preferably between 20 and 40 µm, such as between 23 and 35 µm.

The substrate is a biodegradable substrate selected from cellulose, polybutylene adipate terephthalate, polylactic acid, including substrates derived from corn, sugar cane, or bamboo. Cellulose films may be derived from natural sources, including hemp, wood, and cotton.

The structure of the invention is compostable. For example, the structure of the invention disintegrates under the conditions outlined in ASTM D6400-19, point 6.2, ASTM D6868-19 point 6.2, or EN13432, such that no more than 50% of its dry weight remains after sieving on a 2.0 mm sieve (i.e., the structure is compostable to ≥50%). The structure of the invention preferably disintegrates under the conditions outlined in either of ASTM D6400-19, point 6.2, ASTM D6868-19, point 6.2, or EN13432, such that no more than 30% of its dry weight remains after sieving on a 2.0 mm sieve (i.e., the structure is compostable to ≥70%), such as more preferably no more than 10% of its dry weight remains after sieving on a 2.0 mm sieve (i.e., the structure is compostable to ≥90%). In other words, the structure of the invention passes the test conditions outlined in ASTM D6400-19 (point 6.2), ASTM D6868-19 (point 6.2), or EN13432. The structure of the invention preferably passes the test conditions outlined in both ASTM D6400-19 (point 6.2) and ASTM D6868-19 (point 6.2).

The structure of the invention may biodegrade under the conditions outlined in either of ASTM D6400-19, ASTM D6868-19, or EN13432 (see point 6.3) such that at least 30% of the organic carbon present in each individual component is converted to carbon dioxide (i.e. the printed substrate is biodegradable to at least 30%). The structure of the invention preferably biodegrades under the conditions outlined in either of ASTM D6400-19. ASTM D6868-19, or EN13432 (see point 6.3) such that at least 50% of the organic carbon present is converted to carbon dioxide (i.e. the printed substrate is biodegradable to at least 50%), such as more preferably at least 70% of the organic carbon present is converted to carbon dioxide (i.e. the printed substrate is biodegradable to at least 70%). The structure of the invention may biodegrade under the conditions outlined in EN13432 and complies with this standard.

While the invention uses the coldseal cohesive composition for use in the invention on compostable/biodegradable substrates, the coldseal cohesive composition for use in the invention can also be used on non-compostable and/or non-biodegradable substrates, including polyolefins such as polyethylene, polytetrafluoroethylene, polypropylene, and polymethylpentene, polyesters such as polyethylene terephthalate (PET) and polybutylene terephthalate (PBT), polycarbonates, polystyrene, nylon, polyurethanes, and acrylics.

The invention also provides a packaged item comprising the structure of the invention. The structure of the invention thus forming the packaging for the item. The item can be a food item, such as a heat-sensitive food item including chocolate. The item can be a non-food, heat-sensitive item, such as a pharmaceutical item.

### Method of making the coldseal cohesive composition / structure comprising the coldseal cohesive composition.

The invention further provides a method of making the coldseal cohesive composition for use in the invention, comprising the steps of a) providing a natural rubber latex and a biodegradable resinous material; and b) mixing the natural rubber latex and the biodegradable resinous material in water to form the coldseal cohesive composition.

The invention also provides a method of making the structure or packaged item of the invention comprising the steps of a) providing the coldseal cohesive composition for use in the invention, and b) applying the coldseal cohesive composition to a substrate to make a coated substrate. The method may further comprise the steps of c) contacting the coated substrate with a second substrate, and d) applying pressure to the two substrates. The second substrate may also be coated with the coldseal cohesive composition for use in the invention. The step of applying the cohesive composition to a substrate may comprise printing the coldseal cohesive composition onto the substrate. Preferred methods include gravure and flexographic printing, with gravure most preferred.

The invention further provides the use of the coldseal cohesive composition for use in the invention for sealing packaging.

### EXAMPLES

The invention is further described by the following non-limiting examples which further illustrate the invention, and are not intended, nor should they be interpreted to, limit the scope of the invention.

### Methods

*Viscosity:* Tested using the DIN4 viscosity cup at 20°C.Preferred viscosity is 15s - 25s with DIN4 at 20 °C

*T Peel Test:* The composition for use in the invention are adjusted to print viscosity (18-20 s DIN4 @ 20°C) with water and then printed onto ether a Natureflex^{™} NVS or Jindal OPPalyte^{™} MW247 substrate using a 12µm red K-bar giving dry coat weights of 3.6 - 4.7 g/m² depending on the solid contents. Print samples are cut into 25mm strips and sealed with a pressure of 276 kPa (40 psi) for 1 second using a RDM Pneumatic meshing twin crimp jaws sealing machine. Technical specification: Crimp jaws 1.8mm pitch/1200 angle; area of jaws 150x25mm. The seals are then separated in a T-peel at room temperature (20-21°C) on a Lloyd Instruments LRX tensile tester at 150 mm/min; ensuring the "tail" is supported at an angle of 90° to the vertical. Results are expressed in N/25 mm. Target T-peel seal strength results: Preferably between 3.0 - 5.0 N/25 mm, and more preferably between 3.5 - 5.0 N/25 mm.

*Adhesion Test*: Approximately 100mm of a 25mm wide strip of Tesa 4104 adhesive tape with a 25mm pre-folded end is carefully applied with firm finger pressure to the coldseal surface, ensuring no air bubbles are trapped. The structure is then separated in a T-peel test at room temperature (20-21°C) on a Lloyd Instruments LRX tensile tester at 150 mm/min; ensuring the "tail" is supported at an angle of 90° to the vertical. The tape (pre-folded end) being in the top jaw; film and coldseal in the bottom jaw. Results are expressed in N/25 mm. Preferred adhesion result is ≥ 5 N/25 mm.

*Blocking test*: The samples are placed in a Specac press with platens having a diameter of 10 cm under 10 tons of pressure for 24 hours at room temperature (20-21°C). 25mm printed strips are cut from the samples and then separated in a T-peel test at room temperature (20-21°C) on a Lloyd Instruments LRX tensile tester at 150 mm/min; ensuring the "tail" is supported at an angle of 90° to the vertical. Acceptable blocking is in the range of ≤ 0.5N/25mm with or without a compostable release lacquer applied on the opposite side to the coldseal.

*Air Entrainment Foam Test:* Performed at room temperature (20-21°C). 100ml of coldseal are placed in a 500 ml measuring cylinder with an internal diameter of 5cm. Air bubbling is generated in the sample with an "aquarium pump" Interpet Aqua Air AP4 for 5 mins with the twin outlets combined to feed one porous stone (1.5cm diameter, 2.5cm length) placed at the bottom of the cylinder, the increase in volume is then recorded.

Acceptable maximum increase 200ml. The samples are then left to stand for 1 min and the new volume is recorded to assess reduction in foaming.

*Field disintegration test (Compostability) in an industrial compostable facility*: The substate Natureflex^{™} NVS film was coated with RESR736 on one side at 1.5g dry/m² (100% coverage) and with the composition to be tested on the other side (4g dry/m²; either 100% coverage or 50% coverage applied on the edges of the sheet of the substrate). Testing was then performed at the COMPOST MANUFACTURING ALLIANCE (CMA). Samples with 100% coverage were kept as sheets while samples with 50% coverage were cold-sealed as pouches with the inventive example 2 being the sealant and inside the pouches. The samples were tested according to ASTM D6400-19, point 6.2 and EN13432.

### Examples 1 to 3 and Comparative Example 4

**Table 1: Composition of Inventive Examples 1-3**

| Material | Inv. Ex. 1 | Inv. Ex. 2 | Inv. Ex. 3 |
|---|---|---|---|
| Thai Latex (NRL) | 69.625 | 59.625 | 49.625 |
| Picassian BI-001 (Casein based dispersion) | 30 | 40 | 50 |
| Xiameter AFE-1510 (Antifoam) | 0.125 | 0.125 | 0.125 |
| AF1324FG (Antifoam) | 0.125 | 0.125 | 0.125 |
| Proxel BD 20 (Biocide) | 0.125 | 0.125 | 0.125 |
| Total | 100 | 100 | 100 |
| Water (Viscosity fine-tuning) | 17.5 | 15 | 19 |
| Calculated Solids | 39.4 | 36.0 | 30.6 |

Examples were adjusted to print viscosity (18-20 s DIN4 @ 20°C) with water and printed using a 12µm red K-bar giving dry coat weights of 3.6 - 4.7 g/m² depending on the solid contents of the examples.

Comparative Example 4 is ADHC009 (also known as Polarseal S8044 CS) and is used as a reference. S8044 is a commercial, non-compostable, high-performance, natural rubber latex based coldseal from SunChemical, and is designed to give high-ranking results on a wide range of OPP films. S8044 has a solid content of 55% and a viscosity (DIN4 @ 20°C) of 16.2s. S8044 comprises around 40wt% non-compostable material. S8044 was printed using an 8µm Grey K-bar giving a dry coat weight of 4g/m².

**Table 2: T-peel Seal Strength Results (N/25 mm) on Natureflex^{™} NVS & OPPalyte^{™} MW247 substrates**

| Seal Strength (N/25 mm) | NVS¹ Outside | NVS Inside | MW247² Treated Side | MW247 Untreated Side |
|---|---|---|---|---|
| Inv. Ex. 1 | 3.3 | 3.1 | 3.9 | 3.1 |
| Inv. Ex. 2 | 4.3 | 4.0 | 4.5 | 3.5 |
| Inv. Ex. 3 | 3.8 | 4.2 | 4.6 | 3.4 |
| Comp. Ex 4 S8044 | 3.8 | 3.4 | 4.0 | 4.9 |

| | | | | |
|---|---|---|---|---|
| ¹Futamura Natureflex^{™} NVS is a coldseal compatible compostable film based on cellulose. This substrate is certified as compostable in both industrial and home composting environments and is also suitable for anaerobic digestion. For testing purposes, tests were performed on both sides of the substrate (i.e. inside and outside surfaces). NatureFlex films are cellulose-based, derived from renewable wood pulp and certified to meet both the European EN13432 and American ASTM D6400-19 standards for compostable packaging. NatureFlex NVS is available in 23 and 30 micron thicknesses. The NVS film thickness tested was 23 micron. ²Jindal OPPalyte^{™} MW247 is a white opaque uncoated biaxially oriented polypropylene film, which is print treated on one side and is especially designed for coldseal applications. This substrate is not compostable. Note that the work on this film was carried out for comparative purpose with the work carried out on the NVS film. MW247 with a thickness of 33 microns was used. | | | | |

On treated MW247, Inventive Examples 1-3 all performed well, with seal strength being within the preferred range and similar to Comparative Example 4. On untreated MW247, Inventive Examples 1-3 all performed well, with seal strength being within the preferred range. Good seal strengths were obtained on NVS compostable film for all three Inventive Examples (similar to Comparative Example 4), with Inventive Example 2 being most preferred due to higher seal strengths and higher solid contents.

**Table 3: Adhesion Results on NVS & MW247 (N/25 mm)**

| Adhesion (N/25 mm) | NVS Outside | NVS Inside | MW247 Treated | MW247 Untreated |
|---|---|---|---|---|
| Inv. Ex. 1 | 9.4 | 10.4 | 9.4 | 9.9 |
| Inv. Ex. 2 | 9.4 | 7.8 | 6.7 | 9.9 |
| Inv. Ex. 3 | 8.1 | 6.4 | 6.7 | 10.6 |
| Comp. Ex. 4 | 7.9 | 9.1 | 9.9 | 8.8 |

All three Inventive Examples exhibit good adhesion on both substrates (within the preferred range), similar to Comparative Example 4.

**Table 4: Blocking test with no release lacquer on NVS & MW247**

| Example | NVS Outside | NVS Inside | MW247 Treated | MW247 Untreated |
|---|---|---|---|---|
| Inv. Ex. 1 | 0.21 | 0.19 | 3.13 | 3.01 |
| Inv. Ex. 2 | 0.04 | 0.09 | 3.53 | 1.48 |
| Inv. Ex. 3 | 0.05 | 0.04 | 2.72 | 0.49 |
| Comp. Ex. 4 | 1 | 1.2 | 2.2 | 2.3 |

Quite surprisingly, the inventive formulations release well from both sides of NVS compostable film without release lacquer with forces much lower than the acceptable limit of 0.5N/25mm. This means that the biodegradable or compostable coldseal could potentially be used in a laminate structure with NVS film reverse printed as the release film. This would be highly advantageous as the same coldseal could be used in monoweb and laminate applications.

Comparative Example 4 is normally used in combination with release lacquers and the high blocking values observed on both substrates were expected.

The inventive formulations did not produce the same acceptable blocking results on the MW247 standard film. Thus, if a user wanted to use the inventive biodegradable or compostable coldseal on a non-compostable OPP, the use of a release lacquer would likely be needed.

**Table 5: Blocking with release lacquer**

| Blocking with RESR736 (N/25 mm) | NVS Outside | NVS Inside | MW247 Treated | MW247 Untreated |
|---|---|---|---|---|
| Ex.1 NRL:Pic 70:30 | 0.065 | 0.07 | 0.04 | 0.51 |
| Ex.2 NRL:Pic 60:40 | 0.045 | 0.075 | 0.035 | 0.085 |
| Comp. Ex 4 - S8044 | 0.07 | 0.07 | 0.12 | 0.17 |

SunChemical patented compostable release lacquer RESR736 was applied at a dry coat weight of 1.6 g/m² on the opposite side before applying the various coldseals. As expected, blocking is improved with the use of the compostable release lacquer RESR736 with samples showing virtually no blocking on both films. RESR736 is a solvent-based varnish based on a biodegradable compostable polyamide resin. The solids content of the varnish is 33-35%.

**Table 6: Air Entrainment Foam Test**

| | Inv. Ex. 1 | Inv. Ex. 2 | Inv. Ex. 3 |
|---|---|---|---|
| Time (mins) | Increase in Volume (ml) | | |
| 5 | 150 | 170 | 190 |
| 5 + 1 min. rest | 70 | 100 | 90 |

All three inventive examples performed within the preferred volume increase limit of 200 ml. Lower foaming is a preferred property as foaming on press in the duct or when the coldseal is pumped or goes through recirculation systems can negatively affect runnability and quality of the print.

After 1 minute of rest without air bubbled through the samples, all samples saw a considerable decrease in volume of foam. This is an important factor since if the configuration of the press generates foam in the coldseal, it would be desirable for the foam to dissipate as quickly as possible to avoid the problems previously mentioned.

Field disintegration testing in an industrial compostable facility was performed according to the method described above using inventive example 2 as the composition to be tested. All samples meet ASTM D6400-19 and EN13432 criteria for compostability with a recovery of less than 5% within 50 days of active composting. In other words, all samples meet the criteria of point 6.2 of ASTMs D6400-19 and D6868-19, as well as the compostability test of EN13432.

### Performance summary:

- The Inventive Examples all exhibit good seal strength on NVS and MW247 substrates.
- The Inventive Examples all exhibit good adhesion on NVS and MW247 substrates.
- The Inventive Examples all exhibit low blocking on NVS film with and without RESR736. Low blocking on the OPP film is seen with release lacquer.
- All inventive examples passed the air entrainment foam test.
- Natureflex^{™} NVS film coated RESR736 on one side and with inventive example 2 on the other side meet ASTM D6400-19 (point 6.2) and EN13432 and meet criteria for compostability.

### Inventive Examples 5-7

**Table 7: Composition of examples 5 to 7**

| Material | Inv. Ex. 5 | Inv. Ex. 6 | Inv. Ex. 7 |
|---|---|---|---|
| Thai Latex (NRL) | 70 | 60 | 50 |
| Langro Top A (Albumin based solution) | 30 | 40 | 50 |
| Xiameter AFE-1510 (Antifoam) | 0.125 | 0.125 | 0.125 |
| AF1324FG (Antifoam) | 0.125 | 0.125 | 0.125 |
| Proxel BD 20 (Biocide) | 0.125 | 0.125 | 0.125 |
| Total | 100 | 100 | 100 |
| Calculated Solids | 45.5 | 40.2 | 35.0 |

Examples 5 to 7 did not need viscosity adjustment with water and were printed using either a 12 or 8µm K-bar giving dry coat weights of 3.6 - 4.7 g/m² depending on the solid contents of the examples.

**Table 8: T-peel Seal Strength Results (N/25 mm) on Natureflex^{™} NVS & Natureflex^{™} NP substrates.**

| Seal Strength (N/25 mm) | NVS Outside | NVS Inside | NP³ Outside | NP Inside |
|---|---|---|---|---|
| Inv. Ex. 5 | 2.6 | 2.8 | 2.4 | 3.0 |
| Inv. Ex. 6 | 2.9 | 2.6 | 3.1 | 3.6 |
| Inv. Ex. 7 | 3.9 | 3.9 | 4.4 | 4.5 |

| | | | | |
|---|---|---|---|---|
| ³Futamura Natureflex^{™} NP is a film based on pure cellulose. This substrate is certified as compostable in both industrial and home composting environments and is also suitable for anaerobic digestion. Results are expressed in N/25 mm. Target T-peel seal strength results: Preferably 3.0 - 5.0 N/25 mm, more preferably 3.5 - 5.0 N/25 mm. Tests carried out as previously described. For testing purposes, tests were performed on both sides of the substrates (i.e. inside and outside surfaces). | | | | |

On both substrates, Inventive example 7 performed well, with seal strength being within the preferred range and similar to Comparative Example 4. On the other hand, Inventive example 5 did not achieve the desired level of seal strength on both substrates while inventive example 6 did not achieve the desired level of bond strength on the NVS film (preferred film for coldseal applications) and narrowly gave an acceptable result on the NP film.

**Table 9: Adhesion Results on Natureflex^{™} NVS & Natureflex^{™} NP substrates.**

| Adhesion (N/25 mm) | NVS Outside | NVS Inside | NP Outside | NP Inside |
|---|---|---|---|---|
| Inv. Ex. 5 | 3.9 | 4.2 | 5.2 | 5.1 |
| Inv. Ex. 6 | 4.3 | 5.0 | 8.5 | 7.8 |
| Inv. Ex. 7 | 5.6 | 5.2 | 6.7 | 6.7 |

Results are expressed in N/25 mm. Adhesion Result Preferred is ≥ 5 N/25 mm. Tests carried out as previously described.

Inventive Example 7 exhibit good adhesion on both substrates (within the preferred range). Inventive Example 5 and 6 did not perform well on the NVS (preferred film for coldseal applications) but achieved good adhesion on the NP substrate.

**Table 10: Blocking Results on NVS & NP for Inventive example 7 with and without release lacquer.**

| Blocking (N/25 mm) | NVS Outside | NVS Inside | NP Outside | NP Inside |
|---|---|---|---|---|
| Inv. Ex. 7 & no release lacquer | 0.17 | 0.18 | 0.43 | 0.43 |
| Inv. Ex. 7 with RESR 736 | 0.08 | 0.10 | 0.13 | 0.10 |

Sun Chemical patented compostable release lacquer RESR736 was applied at a dry coat weight of 1.6 g/m² on the opposite side before applying the Inventive Example 7. Only Inventive example 7 was tested for blocking as it was the overall best performing system containing albumin. Tests carried out as previously described.

Quite surprisingly, the inventive formulation Example 7 release well from both sides of NVS and NP compostable film without release lacquer with forces lower than the acceptable limit of 0.5N/25mm. This means that the compostable coldseal could potentially be used in a laminate structure with NVS or NP films reverse printed as the release film. This would be highly advantageous as the same coldseal could be used in monoweb and laminate applications.

As expected, blocking is improved with the use of the compostable release lacquer RESR736 with samples showing virtually no blocking on both films.

### Performance summary:

- The Inventive Example 7 exhibits good seal strength on NVS and NP substrates.
- The Inventive Example 7 exhibits good adhesion on NVS and NP substrates.
- The Inventive Example 7 exhibits low blocking on NVS and NP films with and without RESR736.
- The Inventive Examples 5 and 6 showed deficiencies and would need further modifications to fit within the preferred ranges of performances.

**Table 11: Inventive Examples 8-9.**

| Material | Inv. Ex. 8 | Inv. Ex. 9 |
|---|---|---|
| Thai Latex (NRL) | 60 | 50 |
| CareTips 300D Solution (12.9% solids) | 40 | 50 |
| Xiameter AFE-1510 (Antifoam) | 0.125 | 0.125 |
| AF1324FG (Antifoam) | 0.125 | 0.125 |
| Proxel BD 20 (Biocide) | 0.125 | 0.125 |
| Total | 100 | 100 |
| Water (Viscosity tunning) | 20 | 20 |
| Calculated Solids | 34.8 | 30.1 |

CareTips 300D, produced by Lactips, is the first natural pellet made of 100% biobased ingredients and is fully biodegradable. The pellets contain approximately 13-14% water. The 12.9% solids solution used in the inventive examples 8 and 9 was prepared by dissolving under moderate agitation at room temperature 15% by weight of the pellets in water containing 0.5% of Tego Foamex 1488 defoamer and 0.125% of Proxel BD 20 biocide.

Examples 8 and 9 were adjusted to print viscosity (18-20 s DIN4 @ 20°C) with water and printed using a 12µm red K-bar giving dry coat weights of 4.2 and 3.7 g/m² depending on the solid contents of the examples.

**Table 12: T-peel Seal Strength Results (N/25 mm) on Natureflex^{™} NVS & Natureflex^{™} NP substrates.**

| Seal Strength (N/25 mm) | NVS Outside | NVS Inside | NP Outside | NP Inside |
|---|---|---|---|---|
| Inv. Ex. 8 | 4.1 | 4.2 | 5.2 | 5 |
| Inv. Ex. 9 | 4.7 | 4.4 | 6.2 | 6.4 |

Results are expressed in N/25 mm. Target T-peel seal strength results: Preferably 3.0 - 5.0 N/25 mm, more preferably 3.5 - 5.0 N/25 mm. Tests Carried out as previously described. On both substrates, Inventive Example 8 and 9 performed well, with seal strengths being within the preferred range or slightly greater for example 9 on Natureflex NP which is a favourable outcome.

**Table 13: Adhesion Results on Natureflex^{™} NVS & Natureflex^{™} NP substrates.**

| .Adhesion (N/25 mm) | NVS Outside | NVS Inside | NP Outside | NP Inside |
|---|---|---|---|---|
| Inv. Ex. 8 | 9.3 | 9.1 | 11 | 9.9 |
| Inv. Ex. 9 | 8.1 | 7.1 | 8.5 | 9.3 |

Results are expressed in N/25 mm. Adhesion Result Preferred is ≥ 5 N/25 mm. Tests carried out as previously described. Inventive Examples 8 and 9 exhibit good adhesion on both substrates (within the preferred range).

**Table 14: Blocking with release lacquer**

| Blocking with RESR736 (N/25 mm) | NVS Outside | NVS Inside | NP Outside | NP Inside |
|---|---|---|---|---|
| Inv. Ex. 8 | 0.045 | 0.05 | 0.04 | 0.045 |
| Inv. Ex. 9 | 0.06 | 0.07 | 0.0 | 0.075 |

SunChemical patented compostable release lacquer RESR736 was applied at a dry coat weight of 1.6 g/m² on the opposite side before applying the coldseals. With the use of the compostable release lacquer RESR736, examples 8 and 9 show virtually no blocking on both films.

**Table 15: Air Entrainment Foam Test carried out as previously described.**

| | Inv. Ex. 8 | Inv. Ex. 9 |
|---|---|---|
| Time (mins) | Increase in Volume (ml) | |
| 5 | 140 | 160 |
| 5 + 1 min. rest | 60 | 90 |

Both Inventive Examples 8 and 9 performed within the preferred volume increase limit of 200 ml. Lower foaming is a preferred property as foaming on press in the duct or when the coldseal is pumped or goes through recirculation systems can negatively affect runnability and quality of the print.

After 1 minute of rest without air bubbled through the samples, both samples saw a considerable decrease in volume of foam. This is an important factor since if the configuration of the press generates foam in the coldseal, it would be desirable for the foam to dissipate as quickly as possible to avoid the problems previously mentioned.

### Performance summary:

- The Inventive Examples 8 and 9 exhibit good seal strength on NVS and NP substrates.
- The Inventive Examples 8 and 9 exhibit good adhesion on NVS and NP substrates.
- The Inventive Examples 8 and 9 exhibit low blocking on NVS and NP film with RESR736.
- Inventive examples 8 and 9 passed the air entrainment foam test.

## Claims

1. A structure comprising a water-based coldseal cohesive composition on a substrate; wherein the water-based coldseal cohesive composition comprises;
a) between 30 and 90wt% of natural rubber latex;
b) between 1 and 30wt% of a biodegradable resinous material, wherein the wt% refers to the solids content of the biodegradable resinous material; wherein the biodegradable resinous material is a protein selected from the group consisting of casein, albumin, whey protein, soy protein, soy protein isolate, and combinations thereof, and wherein when the biodegradable resinous material is albumin, it is present in a solids content of at least 4wt% relative to the total weight of the water-based coldseal cohesive composition; and
c) between 30 and 90wt% water;
wherein the substrate is selected from the group consisting of cellulose, polybutylene adipate terephthalate, polylactic acid, and combinations thereof;
wherein the coldseal cohesive composition is applied directly to the substrate; and
wherein the composition comprises less than 10wt% of non-compostable material, wherein the non-compostable material is selected from the group consisting of acrylics, styrene acrylics, shellac-modified polystyrene, ethylene vinyl acetate, styrene butadiene, vinyl acetate, including emulsions thereof, and combinations thereof.

2. The structure of claim 1, wherein the biodegradable resinous material is casein.

3. The structure of any preceding claim, wherein the biodegradable resinous material is albumin.

4. The structure of any preceding claim, wherein:
I) the composition comprises less than 5wt% of non-compostable material, such as wherein the composition is free of non-compostable material; and/or
II) the composition comprises between 1 and 20 wt% of the biodegradable resinous material, such as between 2 and 15 wt%, between 2 and 10 wt%, or between 2 and 8 wt% of the biodegradable resinous material, wherein the wt% refers to the solids content of the biodegradable resinous material.

5. The structure of any preceding claim, wherein:
I) the composition comprises between 40 and 80wt% of the nature rubber latex, such as between 45 and 70 wt%, of the natural rubber latex; and/or
II) the natural rubber latex has a solids content between 20 and 90wt%, such as between 40 and 80wt%, or between 50 and 70 wt%, or a solids content of 60wt%; and/or
III) the composition comprises between 10 and 70wt% of natural rubber solids, such as between 25 and 45 wt% natural rubber solids, or between 25 and 36wt% of natural rubber solids; and/or
IV) the composition comprises between 50 and 75 wt% water, or between 54 and 70 wt% water.

6. The structure of any preceding claim, wherein the composition comprises a solids content of between 10 and 60wt%, such as between 20 and 50wt%, or between 30 and 48 wt% solids content.

7. The structure of any preceding claim, wherein the composition further comprises one or more additives; optionally:
I) wherein the additives are selected from the group consisting of anti-foams, biocides, and combinations thereof; and/or
II) wherein the one or more additives are present in the composition in an amount of up to 10wt%, such as up to 8wt%, up to 5wt%, up to 3wt%, or up to 1wt%.

8. The structure of any preceding claim, wherein:
I) the structure is a packaging structure; and/or
II) the substrate is cellulose; optionally wherein the substrate is selected from substrates derived from corn, sugar cane, or bamboo, and combinations thereof.

9. The structure of any preceding claim, wherein the substrate further comprises a printer layer.

10. A packaged item comprising the structure of any preceding claim; optionally wherein the item is a food item, such as a heat-sensitive food item.

11. The structure of any preceding claim or the packaged item of claim 10, wherein:
I) the coldseal cohesive composition is coated on the substrate with a dry coat weight of between 1 and 10 g/m², such as between 2 and 8 g/m², between 3 and 6 g/m², or between 3 and 5 g/m²; and/or
II) the substrate has a thickness of between 20 and 50 µm, such as between 20 and 40 µm, or between 23 and 35 µm.

12. A method of making the structure of any preceding claim or the packaged item of claims 10 or 11, comprising the steps of:
a) providing the coldseal cohesive composition according to any of claims 1 to 7;
b) applying the coldseal cohesive composition to a substrate to make a coated substrate.

13. The method of claim 12, wherein the step of providing the coldseal cohesive composition comprises the steps of:
i) providing a natural rubber latex and a biodegradable resinous material; and
ii) mixing the natural rubber latex and the biodegradable resinous material in water to form the coldseal cohesive composition.

14. The method of claims 12 or 13,
I) further comprising the step of:
c) contacting the coated substrate with a second substrate; and then
d) applying pressure to the substrates; optionally
wherein before step c), the second substrate is also coated with the coldseal cohesive composition according to any of claims 1 to 7; and/or
II) wherein the step of applying the coldseal cohesive composition to a substrate comprises printing the coldseal cohesive composition onto the substrate.

15. Use of the coldseal cohesive composition according to any of claims 1 to 7 for sealing packaging, wherein the packaging comprises a substrate selected from the group consisting of cellulose, polybutylene adipate terephthalate, polylactic acid, and combinations thereof; wherein the coldseal cohesive composition is applied directly to the substrate.

## Patentansprüche

1. Struktur umfassend eine Kaltsiegel-Bindezusammensetzung auf Wasserbasis auf einem Substrat; wobei die Kaltsiegel-Bindezusammensetzung auf Wasserbasis umfasst:
a) zwischen 30 und 90 Gew.-% Naturkautschuklatex;
b) zwischen 1 und 30 Gew.-% an einem biologisch abbaubaren Harzmaterial, wobei die Gew.-% auf den Feststoffgehalt des biologisch abbaubaren Harzmaterials bezogen sind; wobei das biologisch abbaubare Harzmaterial ein Protein ausgewählt aus der Gruppe bestehend aus Casein, Albumin, Molkeprotein, Sojaprotein, Sojaproteinisolat und Kombinationen davon ist und wobei, wenn das biologisch abbaubare Harzmaterial Albumin ist, es in einem Feststoffgehalt von wenigstens 4 Gew.-% bezogen auf das Gesamtgewicht der Kaltsiegel-Bindezusammensetzung auf Wasserbasis vorhanden ist; und
c) zwischen 30 und 90 Gew.-% Wasser;
wobei das Substrat ausgewählt ist aus der Gruppe bestehend aus Cellulose, Polybutylenadipatterephthalat, Polymilchsäure und Kombinationen davon;
wobei die Kaltsiegel-Bindezusammensetzung direkt auf das Substrat aufgebracht ist; und
wobei die Zusammensetzung weniger als 10 Gew.-% an nichtkompostierbarem Material umfasst, wobei das nichtkompostierbare Material ausgewählt ist aus der Gruppe bestehend aus Acrylen, Styrolacrylen, Schellackmodifiziertem Polystyrol, Ethylenvinylacetat, Styrolbutadien, Vinylacetat, einschließlich Emulsionen davon und Kombinationen davon.

2. Struktur nach Anspruch 1, wobei das biologisch abbaubare Harzmaterial Casein ist.

3. Struktur nach einem der vorstehenden Ansprüche, wobei das biologisch abbaubare Harzmaterial Albumin ist.

4. Struktur nach einem der vorstehenden Ansprüche, wobei:
I) die Zusammensetzung weniger als 5 Gew.-% an nichtkompostierbarem Material umfasst, wie z. B. wobei die Zusammensetzung frei von nichtkompostierbarem Material ist; und/oder
II) die Zusammensetzung zwischen 1 und 20 Gew.-% an dem biologisch abbaubaren Harzmaterial umfasst, wie z. B. zwischen 2 und 15 Gew.-%, zwischen 2 und 10 Gew.-% oder zwischen 2 und 8 Gew.-% an dem biologisch abbaubaren Harzmaterial, wobei die Gew.-% auf den Feststoffgehalt des biologisch abbaubaren Harzmaterials bezogen sind.

5. Struktur nach einem der vorstehenden Ansprüche, wobei:
I) die Zusammensetzung zwischen 40 und 80 Gew.-% an dem Naturkautschuklatex umfasst, wie z. B. zwischen 45 und 70 Gew.-% an dem Naturkautschuklatex; und/oder
II) der Naturkautschuklatex einen Feststoffgehalt zwischen 20 und 90 Gew.-%, wie z. B. zwischen 40 und 80 Gew.-% oder zwischen 50 und 70 Gew.-%, oder einen Feststoffgehalt von 60 Gew.-% aufweist; und/oder
III) die Zusammensetzung zwischen 10 und 70 Gew.-% Naturkautschukfeststoffe, wie z. B. zwischen 25 und 45 Gew.-% Naturkautschukfeststoffe oder zwischen 25 und 36 Gew.-% Naturkautschukfeststoffe umfasst; und/oder
IV) die Zusammensetzung zwischen 50 und 75 Gew.-% Wasser oder zwischen 54 und 70 Gew.-% Wasser umfasst.

6. Struktur nach einem der vorstehenden Ansprüche, wobei die Zusammensetzung einen Feststoffgehalt von zwischen 10 und 60 Gew.-%, wie z. B. zwischen 20 und 50 Gew.-%, oder zwischen 30 und 48 Gew.-% Feststoffgehalt umfasst.

7. Struktur nach einem der vorstehenden Ansprüche, wobei die Zusammensetzung ferner einen oder mehrere Zusatzstoffe umfasst; gegebenenfalls:
I) wobei die Zusatzstoffe ausgewählt sind aus der Gruppe bestehend aus Entschäumern, Bioziden und Kombinationen davon; und/oder
II) wobei der eine oder die mehreren Zusatzstoffe in der Zusammensetzung in einer Menge von bis zu 10 Gew.-%, wie z. B. bis zu 8 Gew.-%, bis zu 5 Gew.-%, bis zu 3 Gew.-% oder bis zu 1 Gew.-% vorhanden sind.

8. Struktur nach einem der vorstehenden Ansprüche, wobei:
I) die Struktur eine Verpackungsstruktur ist; und/oder
II) das Substrat Cellulose ist; wobei das Substrat gegebenenfalls ausgewählt ist aus Substraten abgeleitet von Mais, Zuckerrohr oder Bambus und Kombinationen davon.

9. Struktur nach einem der vorstehenden Ansprüche, wobei das Substrat ferner eine Druckschicht umfasst.

10. Verpackter Gegenstand umfassend die Struktur nach einem der vorstehenden Ansprüche; wobei der Gegenstand gegebenenfalls ein Lebensmittelgegenstand, wie z. B. ein wärmeempfindlicher Lebensmittelgegenstand, ist.

11. Struktur nach einem der vorstehenden Ansprüche oder verpackter Gegenstand nach Anspruch 10, wobei:
I) die Kaltsiegel-Bindezusammensetzung mit einem Trockenschichtgewicht von zwischen 1 und 10 g/m², wie z. B. zwischen 2 und 8 g/m², zwischen 3 und 6 g/m² oder zwischen 3 und 5 g/m², auf das Substrat geschichtet ist; und/oder
II) das Substrat eine Dicke von zwischen 20 und 50 µm, wie z. B. zwischen 20 und 40 µm oder zwischen 23 und 35 µm, aufweist.

12. Verfahren zur Herstellung der Struktur nach einem der vorstehenden Ansprüche oder des verpackten Gegenstands nach Anspruch 10 oder 11, umfassend die Schritte:
a) Bereitstellen der Kaltsiegel-Bindezusammensetzung nach einem der Ansprüche 1 bis 7;
b) Aufbringen der Kaltsiegel-Bindezusammensetzung auf ein Substrat, um ein beschichtetes Substrat herzustellen.

13. Verfahren nach Anspruch 12, wobei der Schritt des Bereitstellens der Kaltsiegel-Bindezusammensetzung die Schritte umfasst:
i) Bereitstellen eines Naturkautschuklatex und eines biologisch abbaubaren Harzmaterials; und
ii) Mischen des Naturkautschuklatex und des biologisch abbaubaren Harzmaterials in Wasser, um die Kaltsiegel-Bindezusammensetzung zu bilden.

14. Verfahren nach Anspruch 12 oder 13,
I) ferner umfassend den Schritt:
c) Inkontaktbringen des beschichteten Substrats mit einem zweiten Substrat; und dann
d) Anlegen von Druck an die Substrate; gegebenenfalls wobei vor Schritt c) das zweite Substrat ebenfalls mit der Kaltsiegel-Bindezusammensetzung nach einem der Ansprüche 1 bis 7 beschichtet wird; und/oder
II) wobei der Schritt des Aufbringens der Kaltsiegel-Bindezusammensetzung auf ein Substrat Drucken der Kaltsiegel-Bindezusammensetzung auf das Substrat umfasst.

15. Verwendung der Kaltsiegel-Bindezusammensetzung nach einem der Ansprüche 1 bis 7 zum Versiegeln von Verpackung, wobei die Verpackung ein Substrat ausgewählt aus der Gruppe bestehend aus Cellulose, Polybutylenadipatterephthalat, Polymilchsäure und Kombinationen davon umfasst; wobei die Kaltsiegel-Bindezusammensetzung direkt auf das Substrat aufgebracht ist.

## Revendications

1. Structure comprenant une composition cohésive de scellement à froid à base d'eau sur un substrat ; dans laquelle la composition cohésive de scellement à froid à base d'eau comprend :
a) entre 30 et 90 % en poids de latex de caoutchouc naturel ;
b) entre 1 et 30 % en poids d'une matière résineuse biodégradable, le % en poids se rapportant à la teneur en solides de la matière résineuse biodégradable ; dans laquelle la matière résineuse biodégradable est une protéine choisie dans le groupe constitué par la caséine, l'albumine, la protéine de lactosérum, la protéine de soja, l'isolat de protéine de soja, et des combinaisons de celles-ci, et dans laquelle, lorsque la matière résineuse biodégradable est de l'albumine, elle est présente en une teneur en solides d'au moins 4 % en poids par rapport au poids total de la composition cohésive de scellement à froid à base d'eau ; et
c) entre 30 et 90 % en poids d'eau ;
dans laquelle le substrat est choisi dans le groupe constitué par la cellulose, le poly(adipate téréphtalate de butylène), le poly(acide lactique) et leurs combinaisons ;
dans laquelle la composition cohésive de scellement à froid est appliquée directement sur le substrat ; et
dans laquelle la composition comprend moins de 10 % en poids de matière non compostable, dans laquelle la matière non compostable est choisie dans le groupe constitué par les acryliques, les styrène acryliques, le polystyrène modifié par une gomme laque, l'éthylène acétate de vinyle, le styrène butadiène, l'acétate de vinyle, y compris ses émulsions et leurs combinaisons.

2. Structure selon la revendication 1, dans laquelle la matière résineuse biodégradable est la caséine.

3. Structure selon l'une quelconque des revendications précédentes, dans laquelle la matière résineuse biodégradable est l'albumine.

4. Structure selon une quelconque revendication précédente, dans laquelle :
I) la composition comprend moins de 5 % en poids de matière non compostable, tel que dans laquelle la composition est exempte de matière non compostable ; et/ou
II) la composition comprend entre 1 et 20 % en poids de la matière résineuse biodégradable, tel qu'entre 2 et 15 % en poids, entre 2 et 10 % en poids, ou entre 2 et 8 % en poids de la matière résineuse biodégradable, le % en poids se rapportant à la teneur en solides de la matière résineuse biodégradable.

5. Structure selon une quelconque revendication précédente, dans laquelle :
I) la composition comprend entre 40 et 80 % en poids du latex de caoutchouc naturel, tel qu'entre 45 et 70 % en poids du latex de caoutchouc naturel ; et/ou
II) le latex de caoutchouc naturel a une teneur en solides comprise entre 20 et 90 % en poids, telle qu'entre 40 et 80 % en poids, ou entre 50 et 70 % en poids, ou une teneur en solides de 60 % en poids ; et/ou
III) la composition comprend entre 10 et 70 % en poids de solides de caoutchouc naturel, tel qu'entre 25 et 45 % en poids de solides de caoutchouc naturel, ou entre 25 et 36 % en poids de solides de caoutchouc naturel ; et/ou
IV) la composition comprend entre 50 et 75 % en poids d'eau, ou entre 54 et 70 % en poids d'eau.

6. Structure selon l'une quelconque des revendications précédentes, dans laquelle la composition comprend une teneur en solides comprise entre 10 et 60 % en poids, telle qu'entre 20 et 50 % en poids, ou entre 30 et 48 % en poids de teneur en solides.

7. Structure selon l'une quelconque des revendications précédentes, dans laquelle la composition comprend en outre un ou plusieurs additifs ; éventuellement :
I) dans laquelle les additifs sont choisis dans le groupe constitué par les antimousses, les biocides et leurs combinaisons ; et/ou
II) dans laquelle l'additif ou les additifs sont présents dans la composition en une quantité allant jusqu'à 10 % en poids, telle que jusqu'à 8 % en poids, jusqu'à 5 % en poids, jusqu'à 3 % en poids ou jusqu'à 1 % en poids.

8. Structure selon une quelconque revendication précédente, dans laquelle :
I) la structure est une structure d'emballage ; et/ou
II) le substrat est une cellulose ; éventuellement, le substrat est choisi parmi des substrats dérivés du maïs, de la canne à sucre ou du bambou, et leurs combinaisons.

9. Structure selon l'une quelconque des revendications précédentes, dans laquelle le substrat comprend en outre une couche d'imprimante.

10. Article emballé comprenant la structure selon l'une quelconque des revendications précédentes ; éventuellement dans lequel l'article est un article alimentaire, tel qu'un article alimentaire thermosensible.

11. Structure selon l'une quelconque des revendications précédentes ou article emballé selon la revendication 10, dans laquelle/lequel :
I) la composition cohésive de scellement à froid est revêtue sur le substrat d'un poids de revêtement sec compris entre 1 et 10 g/m², tel qu'entre 2 et 8 g/m², entre 3 et 6 g/m², ou entre 3 et 5 g/m² ; et/ou
II) le substrat a une épaisseur comprise entre 20 et 50 µm, telle qu'entre 20 et 40 µm, ou entre 23 et 35 µm.

12. Procédé de préparation de la structure selon l'une quelconque des revendications précédentes ou de l'article emballé selon les revendications 10 ou 11, comprenant les étapes de :
a) fourniture de la composition cohésive de scellement à froid selon l'une quelconque des revendications 1 à 7 ;
b) application de la composition cohésive de scellement à froid sur un substrat pour préparer un substrat revêtu.

13. Procédé selon la revendication 12, dans lequel l'étape de fourniture de la composition cohésive de scellement à froid comprend les étapes de :
i) fourniture d'un latex de caoutchouc naturel et d'une matière résineuse biodégradable ; et
ii) mélange du latex de caoutchouc naturel et de la matière résineuse biodégradable dans de l'eau pour former la composition cohésive de scellement à froid.

14. Procédé selon la revendication 12 ou 13,
I) comprenant en outre l'étape de :
c) mise en contact du substrat revêtu avec un second substrat ; et ensuite
d) application d'une pression sur les substrats ; éventuellement
dans lequel, avant l'étape c), le second substrat est également revêtu par la composition cohésive de scellement à froid selon l'une quelconque des revendications 1 à 7 ; et/ou
II) dans lequel l'étape d'application de la composition cohésive de scellement à froid sur un substrat comprend l'impression de la composition cohésive de scellement à froid sur le substrat.

15. Utilisation de la composition cohésive de scellement à froid selon l'une quelconque des revendications 1 à 7 pour sceller un emballage, dans laquelle l'emballage comprend un substrat choisi dans le groupe constitué par la cellulose, le poly(adipate téréphtalate de butylène), le poly(acide lactique) et leurs combinaisons ; dans laquelle la composition cohésive de scellement à froid est appliquée directement sur le substrat.
